# EUROPÄISCHE PATENTSCHRIFT

(11) **EP 4 190 723 B1**
(45) Veröffentlichungstag und Bekanntmachung des Hinweises auf die Patenterteilung: **11.11.2026**
(21) Anmeldenummer: 21211960.6
(22) Anmeldetag: 02.12.2021
(51) Int. Cl.: B65G 1/137

(54) **VERFAHREN UND EINE KOMMISSIONIERVORRICHTUNG ZUM ZUSAMMENSTELLEN VON VERBRAUCHSMATERIALIEN IN FORM VON PORTIONEN UND PACKUNGEN**
METHOD AND PICKING DEVICE FOR ASSEMBLING CONSUMABLE ITEMS IN THE FORM OF PORTIONS AND PACKAGES
PROCÉDÉ ET DISPOSITIF DE PRÉPARATION DE COMMANDES PERMETTANT DE RASSEMBLER DES CONSOMMABLES SOUS FORME DE PORTIONS ET D'EMBALLAGES

(43) Veröffentlichungstag der Anmeldung: 07.06.2023
(73) Patentinhaber: Becton Dickinson Rowa Germany GmbH, 53539 Kelberg (DE)
(72) Erfinder: HELLENBRAND, Christoph, 56761 Kaifenheim (DE)
(74) Vertreter: Zenz Patentanwälte Partnerschaft mbB

(56) Entgegenhaltungen:
- EP-A1- 3 263 491
- US-A1- 2018 265 292
- US-A1- 2021 179 364
- US-A1- 2021 188 553

## Beschreibung

Die vorliegende Erfindung betrifft ein Verfahren und eine Kommissioniervorrichtung zum Zusammenstellen von Verbrauchsmaterialien in Form von Portionen und Packungen auf der Basis von Zusammenstellaufträgen in einem Zielbehälter.

Bei modernen, aus dem Stand der Technik bekannten Kommissioniervorrichtungen wird eine große Anzahl unterschiedlicher Arten von Kleinstückgütern chaotisch und platzoptimiert auf langgestreckten horizontalen Lagerflächen gelagert. Diese Lagerflächen werden von einer Mehrzahl von Regalböden bereitgestellt, wobei pro Regalboden eine Vielzahl von Kleinstückgütern auf jeweils einem Lagerplatz gelagert wird. Bei einer chaotischen platzoptimierten Lagerung werden Kleinstückgüter, beispielsweise Arzneimittelpackungen, Nahrungsergänzungsmittelpackungen und andere Verbrauchsmaterialien in vorzugsweise quaderförmigen Packungen (Verbände etc.) bei Kommissioniervorrichtungen, die in Apotheken oder Krankenhäusern verwendet werden, derart auf den Lagerflächen gelagert, dass eine möglichst große Anzahl von Kleinstückgütern pro Flächeneinheit einer Lagerfläche gelagert werden kann. Ein Lagerplatz auf der Lagerfläche bzw. einem Regaloden ist bei der chaotischen Lagerung kein permanenter festgelegter Abschnitt dieser Lagerfläche mit fixen Abmessungen, sondern ein Lagerplatz wird durch die auf dem Flächenabschnitt gelagerte Packung definiert. Ferner bestimmen primär die Abmessungen eines freien Flächenabschnitts, welche Packung(en) dort gelagert werden.

Bei den vorgenannten Kommissioniervorrichtungen werden regelmäßig nur quaderförmige Packungen auf den Lagerplätzen eingelagert, oder in quaderförmigen Trägern angeordnete Portionen. Abweichungen von der Quaderform sind mit den bekannten Kommissioniervorrichtungen nur dann lagerbar, wenn sie eine ebene Grundfläche und parallele senkrechte Seitenflächen aufweisen.

Es ist jedoch nicht möglich, in diesen Kommissioniervorrichtungen nicht-quaderförmige Portionen beispielsweise in Form von kleinen Flaschen oder Spritzen einzulagern und zum Zusammenstellen in Kombination mit "normalen" Packungen bereitzustellen.

In Krankenhäusern ist es üblich, sämtliche von zum Beispiel einer Station benötigte Verbrauchsmaterialien, sei es in Packungsform oder in Nicht-Packungsform (hier weiter bezeichnet Portionen) gesammelt als Zusammenstellung bereitzustellen. Auf der Station werden die in der Zusammenstellung enthaltenden Packungen und Portionen dann patientenindividuell bearbeitet. Da regelmäßig Packungen und Portionen benötigt werden, ist es mit den oben beschriebenen Kommissioniervorrichtungen nicht möglich, Zusammenstellungen für eine Station vollautomatisch zu kommissionieren, zumindest in dem üblichen Fall, dass diese Zusammenstellung Portionen und Packungen umfasst.

Die EP 3 263 491 A1 offenbart ein Verfahren zum Betrieb eines Transportroboters in einem Lagerregal, welches mindestens eine horizontale Regalfahrstrecke aufweist, der mindestens eine Lagerebene zugeordnet ist, auf der eine Vielzahl von Gegenständen in der Art von Gebinden und/oder Kartons und/oder Paletten und/oder einzelne Verpackungseinheiten gelagert ist, wobei der Transportroboter mindestens eine Arbeitsebene aufweist, auf der mindestens ein Zielbehälter gelagert ist, der mithilfe eines roboterseitigen Lademittels in der Art eines Pick- & Place-Vorgangs mit den unterschiedlichen Gegenständen befüllbar ist. Die EP 3 263 491 A1 offenbart zusätzlich den Oberbegriff des Anspruchs 11.

Die US 2021/179364 A1 offenbart ein modulares Lagersystem und ein Montageverfahren dafür. Eine Vielzahl von Lagerbehältern wird kombiniert, um einen kombinierten Lagerbereich zu bilden, der mit einer Schienenanordnung, einem Behältergreifroboter und einer Vielzahl von Behältern ausgestattet ist. Ein Innenraum mindestens eines spurwechselnden Behälters steht in Verbindung mit dem Innenraum mindestens eines der mehreren Lagerbehälter.

Die US 2021/188553 A1 offenbart ein Inventarhandhabungssystem und ein Verfahren zu dessen Verwaltung, das mehrere Regaleinheiten mit Regalen umfasst, auf die Behälter gestellt werden. Das System umfasst eine bewegliche Kommissionierstation, die so konfiguriert ist, dass sie sich zwischen den Regaleinheiten bewegt und Artikel zwischen Behältern transferiert. Die bewegliche Kommissionierstation ist so konfiguriert, dass sie zumindest einen Teil einer Vielzahl von Artikeln, die in einem zu erfüllenden Auftrag aufgeführt sind, aus den mehreren Regaleinheiten in einen Auftragsbehälter sammelt. Die bewegliche Kommissionierstation ist so konfiguriert, dass sie die auswählbaren Artikel in einer optimalen Anordnung in den Auftragsbehälter legt, während sie gleichzeitig die Entfernung, über die die Behälter bewegt werden, und mögliche Schäden an den Artikeln minimiert.

Die US 2018/265292 A1 offenbart eine Kommissioniervorrichtung mit einer erste Regalreihe mit horizontalen Regalböden und zumindest eine zweite Regalreihe mit einer Mehrzahl von übereinander angeordneten Regalböden mit mehreren Lagerschächten, einer zwischen der ersten und der zweiten Regalreihe gebildeten Gasse, in der ein Bediengerät verfahrbar ist, einer Einlagerungseinrichtung, einer Auslagerungseinrichtung und einer Hilfs-Auslagerungseinrichtung. Das Bediengerät umfasst eine Greifvorrichtung zum Ein- und/oder Auslagern von Stückgütern auf die bzw. von den horizontalen Regalböden und Einfüllen in die Lagerschächte, wobei eine mit dem Bediengerät gekoppelte Steuereinrichtung zum Auslagern von hintereinander liegenden gleichartigen Stückgütern von den horizontalen Regalböden und Einlagern dieser Stückgüter in den Lagerschächten und zum Auslagern von einem oder mehreren auf den horizontalen Regalböden angeordneten Stückgütern und Übergeben dieser Stückgüter an die Hilfs-Auslagerungseinrichtung ansteuerbar ist.

Es ist Aufgabe der vorliegenden Erfindung, ein Verfahren und eine Kommissioniervorrichtung bereitzustellen, mit welchem bzw. welcher Verbrauchsmaterialien in Form von Packungen und Portionen auf der Basis von Zusammenstellaufträgen in einem Zielbehälter zusammengestellt werden können. Die Verbrauchsmaterialien können Arzneimittelpackungen und Arzneimittelportionen und andere, in Form von Portionen und Packungen in Krankenhäusern benötigte Materialien, beispielsweise verpacktes Verbandmaterial, Nahrungsmittelergänzungsprodukte und dergleichen, umfassen.

Die Aufgabe wird gelöst durch ein Verfahren gemäß Patentanspruch 1. Bei dem erfindungsgemäßen Verfahren zum Zusammenstellen von Verbrauchsmaterialien in Form von Portionen und Packungen auf der Basis von Zusammenstellaufträgen in einem Zielbehälter wird in einem Schritt a) ein Zusammenstellauftrag (ZA) analysiert und die Art und Menge sowie Lagerplätze der Packungen und Portionen in einer Lagereinheit einer Kommissioniervorrichtung bestimmt.

In einem Schritt b) wird bei einem einer Packung zugeordneten Lagerplatz die Packung mit einem Bediengerät ergriffen und einem Zielbehälter auf einem Kommissionierplatz einer Kommissioniereinheit der Kommissioniervorrichtung zugeführt. Bei dem Kommissionierplatz handelt es sich um einen Abstellplatz für den Zielbehälter, wobei an diesem Platz Packungen und Portionen dem Zielbehälter zugeführt werden.

In einem Schritt c1) wird bei einem einer Portion zugeordneten Lagerplatz ein Lagerbehälter mit dem Bediengerät ergriffen und einem Bereitstellplatz der Kommissioniereinheit zugeführt. Bei dem Bereitstellplatz handelt es sich um einen Abstellplatz für einen Lagerbehälter für Portionen (die nicht eigenständig einlagerbar und handhabbar sind), bei welchem dem Lagerbehälter eine durch den Zusammenstellauftrag definierte Menge an Portionen entnommen wird.

In einem Schritt c2) wird dann mit einem Greifer einer Greifeinrichtung eine Portion in dem Lagerbehälter auf dem Bereitstellplatz ergriffen, und in einem Schritt c3) wird der Greifer zu dem Zielbehälter bewegt und die Portion dem Zielbehälter zugeführt.

In einem Schritt c4) wird der Lagerbehälter auf dem Bereitstellplatz mittels des Bediengerätes einem Lagerplatz zugeführt, wobei es sich bei diesem Lagerplatz um den Lagerplatz, auf welchem der Lagerbehälter zuvor angeordnet war, oder um einen neu zugewiesenen Lagerplatz handeln kann.

Die Reihenfolge der Schritte beziehungsweise Schrittkombinationen b) und [c1), {c2) + c3)}, c4)] ist beliebig und die Anzahl der Wiederholungen der Schritte beziehungsweise Schrittkombinationen ist von dem Zusammenstellauftrag abhängig, wobei unter dem Begriff der Schrittkombinationen die Schritte [c1) - c4)] und {c2 + c3)} zu verstehen sind, wobei die Schritte c2) + c3) beliebig oft in der Schrittkombination c1) - c4) ausgeführt werden können und die Schrittkombination c1) - c4) beliebig oft (jeweils in Abhängigkeit von dem Zusammenstellauftrag) ausgeführt werden kann, ggf. "unterbrochen" durch eine Ausführung des Schritts b).

Bei einem beispielhaften Zusammenstellauftrag, der zwei unterschiedliche Packungen und drei Portionen der gleichen Art umfasst, ist es beispielsweise denkbar, dass zunächst ein Lagerbehälter mit den passenden Portionen einem Bereitstellplatz zugeführt wird (Schritt c1), dann mit dem Greifer drei Portionen dem Zielbehälter zugeführt werden (Schritte c2) und c3)) und nach dem Zuführen des Lagerbehälters auf den Bereitstellplatz mit dem Bediengerät die Packungen dem Zielbehälter zugeführt werden (Schritt b)), wobei das Zuführen der Packungen sowie der Portionen zumindest abschnittsweise parallel durchgeführt werden kann, da für diese Arbeitsschritte unterschiedliche Handhabungseinrichtungen verwendet werden. Die vorgenannte Reihenfolge der Abarbeitung ist jedoch nicht zwingend, in beispielsweise der Abhängigkeit der Positionierung des Bediengerätes zu den angeforderten Packungen und Portionen kann diese auch abweichen. Ferner kann die Reihenfolge ebenfalls abweichen, wenn beispielsweise die Einlagerung von einer Packung oder Portion zum Zeitpunkt der anfänglichen Bearbeitung des Zusammenstellauftrages noch nicht abgeschlossen ist. Im Hinblick auf die Reihenfolge der Abarbeitung ist das erfindungsgemäße Verfahren also sehr flexibel und nicht auf eine bestimmte Reihenfolge (im Hinblick auf Packungen und Portionen) festgelegt.

Erfindungsgemäß ist es vorgesehen, dass in der Kommissioniervorrichtung auf Lagerplätzen Packungen und Lagerbehälter für Portionen gelagert werden. Erfindungsgemäß wird im Schritt c2) eine Portion mit dem Greifer der Greifeinrichtung ergriffen. Bei einer Ausführungsform des erfindungsgemäßen Verfahrens ist es vorgesehen, dass die Portion in dem Lagerbehälter ergriffen wird, indem der Greifer an eine vorgegebene Position verfahren wird, wobei dieser Position eine Portion in dem Lagerbehälter zugeordnet ist. Bei dieser Ausführungsform des Verfahrens sind die Portionen in den Lagerbehältern also an bekannten fest vorgegebenen Positionen angeordnet, wobei diese Positionen innerhalb des Lagerbehälters bekannt sind, und aufgrund der bekannten Anordnung des Lagerbehälters auf dem Bereitstellplatz die Positionen der einzelnen Portionen bekannt sind und damit direkt angefahren werden können.

Es ist jedoch auch denkbar, dass die Portionen ohne vorgegebene Position, beispielsweise einfach als "Schüttgut", in dem Lagerbehälter angeordnet sind, was zum einen das Anordnen der Portionen in dem Lagerbehälter vereinfacht und zum anderen die Aufnahmekapazität eines Lagerbehälters für eine Art von Portion erhöht. In einem solchen Fall ist es erfindungsgemäß vorgesehen, dass eine Portion aus einem Lagerbehälter ergriffen wird, indem mit einer Kamera eine Aufnahme der in dem Lagerbehälter ungeordnet angeordneten Portionen erstellt wird, mit einer Bildverarbeitungssoftware die genaue Anordnung zumindest eines Teils der Portionen bestimmt und basierend darauf eine zu ergreifende Portion festgelegt und mit dem Greifer ergriffen wird. Die Nutzung von Bildverarbeitungssoftware zum Ermitteln der genauen Anordnung von Portionen ist aus dem Stand der Technik bekannt und beispielsweise in der EP 3 854 730 A1 genauer offenbart. Bei dem Greifer kann es sich beispielsweise um einen Sauggreifer handeln, der ebenfalls in der vorgenannten Anmeldung offenbart ist.

In Abhängigkeit von der Größe eines Zusammenstellauftrages kann es vorkommen, dass zu einem vorgegebenen Zeitpunkt X1 noch nicht sämtliche für den Zusammenstellauftrag notwendigen Packungen und Portionen verfügbar sind. Ferner ist es denkbar, dass in einem Zielbehälter mehrere Zusammenstellaufträge zusammengestellt werden sollen, die zu unterschiedlichen Zeiten verfügbar sind. Um bei dem erstgenannten Fall einen Zusammenstellauftrag zumindest teilweise bearbeiten zu können und bei dem zweitgenannten Fall das Zusammenführen mehrerer Zusammenstellaufträge in einem Zielbehälter zu ermöglichen, ist es bei einer bevorzugten Ausführungsform des erfindungsgemäßen Verfahrens vorgesehen, dass der Zielbehälter nach dem Abarbeiten eines Zusammenstellauftrages oder eines Teils eines Zusammenstellauftrages mit Hilfe des Bediengerätes zu einem Lagerplatz bewegt und der Zielbehälter eingelagert wird.

Um zu vermeiden, dass nach dem Zusammenstellen sämtlicher Packungen und Portionen in dem Zielbehälter die Bearbeitung des nächsten Zusammenstellauftrages, für welchen ein "neuer" Zielbehälter auf dem Kommissionierplatz benötigt wird, verzögert wird, ist es bei einer bevorzugten Ausführungsform des Verfahrens vorgesehen, dass der Zielbehälter nach dem Zusammenstellen sämtlicher Portionen zu einem Abgabeplatz bewegt wird, von welchem der Zielbehälter von beispielsweise einem Bediener entnommen werden kann.

Die "neuen" Zielbehälter können dem Kommissionierplatz beispielsweise von einem Bediener zugeführt werden. Bei einer bevorzugten Ausführungsform des Verfahrens, bei welchem eine manuelle Bestückung des Kommmissionierplatzes vermieden wird und somit die vollautomatische Bearbeitung einer Mehrzahl von Zusammenstellaufträgen möglich ist, ist es vorgesehen, dass ein Zielbehälter mit dem Bediengerät von einem Lagerplatz ergriffen und dem Kommissionierplatz zugeführt wird. Die leeren Zielbehälter werden bei dieser Ausführungsform des erfindungsgemäßen Verfahrens also in der Lagereinheit der Kommissioniervorrichtung eingelagert.

Die Lagerbehälter können der Kommissioniervorrichtung beispielsweise von einem Bediener zugeführt werden. Bei einer bevorzugten Ausführungsform ist es jedoch vorgesehen, dass die Lagerbehälter zum Einlagern mittels einer Einlagerungseinrichtung bereitgestellt werden und von dem Bediengerät von der Einlagerungseinrichtung zu einem Lagerplatz bewegt werden.

Um einen Zusammenstellauftrag zu dokumentieren und die Sicherheit im Hinblick auf das Zusammenstellen der Packungen und Portionen zu erhöhen, ist es bei einer bevorzugten Ausführungsform vorgesehen, vor dem Zuführen der ersten und/oder letzten Portion oder Packung eine Aufnahme des leeren und/oder vollständig befüllten Zielbehälters zu erstellen und zu speichern. Anhand der Aufnahme des leeren Zielbehälters kann dokumentiert werden, dass dieser zu Beginn der Zusammenstellung auch tatsächlich leer war und nicht eine Packung oder Portion in diesem angeordnet war, die dem Zusammenstellauftrag nicht entspricht. In Abhängigkeit von der Menge der Packungen und Portionen kann anhand des Bildes des befüllten Zielbehälters gegebenenfalls die korrekte Ausführung des Zusammenstellauftrages verifiziert und dokumentiert werden.

Bei einer weiteren Ausführungsform kann es darüber hinaus vorgesehen sein, dass nach dem Zuführen jeder Portion und jeder Packung eine Aufnahme des Zielbehälters erstellt und gespeichert wird.

Bei einer weiteren Ausführungsform ist darüber hinaus (zusätzlich) vorgesehen, dass vor oder nach dem Zuführen jeder Portion und jeder Packung ein Code der Portion oder der Packung erfasst und mit einem Soll-Code verglichen wird. Sollte der Vergleich ergeben, dass eine falsche Packung oder eine falsche Portion in den Zielbehälter bewegt wurde, kann der Vorgang gestoppt werden. Bei "richtigem" Code kann dieser beispielsweise gespeichert werden, so dass am Ende des Zusammenstellens zweifelsfrei dargelegt werden kann, dass jede Packung und/oder Portion einer Zusammenstellung entsprechend dem Zusammenstellauftrag in den Zielbehälter bewegt wurde. Bei dem Code kann es sich beispielsweise um einen Barcode, einen Code eines RFID-Transponders oder einen DataMatrix-Code handeln.

Ein Erfassen vor dem eigentlichen "Zuführen", also dem Ablegen einer Portion in einem Zielbehälter, kann durchgeführt werden, während die Portion mit der Greifeinrichtung gegriffen ist.

Die oben genannte Aufgabe wird ferner gelöst durch eine Kommissioniervorrichtung gemäß Patentanspruch. Die erfindungsgemäße Kommissioniervorrichtung zum Zusammenstellen von Portionen und Packungen auf der Basis von Zusammenstellaufträgen in einem Zielbehälter umfasst eine Lagereinheit mit zumindest einer Regalreihe mit einer Mehrzahl von horizontalen Regalböden mit jeweils einer Mehrzahl von Lagerplätzen für Packungen und Lagerbehälter für eine Mehrzahl von Portionen, zumindest einem vor der Regalreihe horizontal und vertikal verfahrbaren Bediengerät mit einer Ablagefläche für Packungen und Lagerbehälter und einer Transporteinrichtung zum Bewegen von Packungen und Lagerbehältern, zumindest einer Einlagerungseinrichtung, mit welcher Packungen und Lagerbehälter in die Lagereinheit bewegt werden und von welcher das Bediengerät Packungen und Lagerbehälter entnehmen kann und einer Identifiziereinrichtung zum Identifizieren von Packungen und Lagerbehältern.

Ferner umfasst die erfindungsgemäße Kommissioniervorrichtung zumindest eine Kommissioniereinheit mit einer Bereitstellstation mit einem Bereitstellplatz für Lagerbehälter, wobei die Bereitstellstation derart ausgebildet ist, dass Lagerbehälter von der Ablagefläche des Bediengerätes auf den Bereitstellplatz und von dem Bereitstellplatz auf die Ablagefläche des Bediengerätes bewegbar sind, einer Kommissionierstation mit einem Kommissionierplatz für einen Zielbehälter, wobei die Kommissionierstation derart ausgebildet ist, dass Packungen von dem Bediengerät in den Zielbehälter auf dem Kommissionierplatz bewegbar sind und mit einer oberhalb des Bereitstellplatzes und des Kommissionierplatzes angeordneten Greifeinrichtung mit einem vertikal und horizontal verfahrbaren Greifer oder Roboter, mit welcher Portionen von dem Lagerbehälter auf dem Bereitstellplatz in den Zielbehälter befördert werden können.

In der erfindungsgemäßen Vorrichtung sind zum Zusammenstellen von Packungen und Portionen in einem Zielbehälter zwei Arten von "Stückgütern" gelagert, nämlich einmal "normale" Packungen und zum anderen Lagerbehälter, in denen eine Mehrzahl von Portionen angeordnet sind. Die Packungen und die Lagerbehälter haben gemeinsam, dass sie regelmäßig quaderförmig ausgebildet sind und mit dem gleichen Bediengerät ergriffen und befördert werden können. Die erfindungsgemäße Kommissioniervorrichtung umfasst neben der Lagereinheit, die im Wesentlichen beispielsweise durch eine oben beschriebene, aus dem Stand der Technik bekannte Vorrichtung realisiert sein kann, zumindest eine Kommissioniereinheit, mit welcher den Zielbehältern Portionen zugeführt werden. Diese Kommissioniereinheit umfasst eine Bereitstellstation und eine Kommissionierstation, die speziell ausgebildet sind, wobei die Bereitstellstation so ausgebildet ist, dass Lagerbehälter von der Ablagefläche auf den Bereitstellplatz und von dem Bereitstellplatz auf die Auflagefläche bewegbar sind und die Kommissionierstation derart ausgebildet ist, dass Packungen von dem Bediengerät in den Zielbehälter bewegbar sind. Durch diese spezielle Art und Weise der Ausgestaltungen der Bereitstellstation und der Kommissionierstation ist es denkbar, dass die zumindest eine Kommissioniereinheit in der Lagereinheit integriert ist oder außerhalb der Lagereinheit angeordnet ist. Ferner ist es denkbar, dass eine Lagereinheit mit einer internen Kommissioniereinheit und zumindest einer externen oder mehreren externen Kommissioniereinheit(en) zu einer erfindungsgemäßen Kommissioniervorrichtung kombiniert ist.

Indem eine Lagereinheit mit einer Kommissioniereinheit kombiniert wird und in der Lagereinheit Lagerbehälter mit Portionen gelagert werden, ist es möglich, eine Kommissioniervorrichtung bereitzustellen, mit welcher sowohl Packungen als auch Portionen in einem Zielbehälter zusammenstellbar sind.

Wie bereits oben angedeutet, können die Portionen entweder an einem definierten Ort innerhalb eines Lagerbehälters oder ungeordnet (quasi als Schüttgut) in einem Lagerbehälter angeordnet sein. Um das Ergreifen einer Portion bei ungeordneter Anordnung in einem Lagerbehälter zu ermöglichen, ist es bei einer bevorzugten Ausführungsform der erfindungsgemäßen Kommissioniervorrichtung vorgesehen, dass die Kommissioniereinheit zumindest eine Kamera umfasst, mit welcher Aufnahmen vom Inhalt des Lagerbehälters auf dem Bereitstellplatz erstellbar sind. Um darüber hinaus eine Aufnahme von dem Inhalt des Zielbehälters zu einem beliebigen Zeitpunkt erstellen zu können, ist es darüber hinaus vorgesehen, dass die Kamera derart angeordnet oder bewegbar ist, dass mit der Kamera auch Aufnahmen des Inhaltes des Zielbehälters auf dem Kommissionierplatz erstellbar sind.

Bei einer Ausführungsform der Kommissioniervorrichtung, bei welcher die Kommissioniereinheit in der Lagereinheit angeordnet ist, wird der Bereitstellplatz für einen Lagerbehälter regelmäßig durch einen der horizontalen Regalböden bereitgestellt. In einem solchen Fall kann der Lagerbehälter einfach direkt mit dem Bediengerät auf dem Regalboden beziehungsweise dem Bereitstellplatz abgestellt werden. Alternativ kann der Bereitstellplatz auch durch einen Abschnitt eines Förderbandes oder einen Rollenbahn innerhalb der Kommissioniervorrichtung bereitgestellt werden. Für den Fall jedoch, dass die Kommissioniereinheit außerhalb der Lagereinheit angeordnet ist, ist es vorgesehen, dass die Kommissioniereinheit eine Lagerbehälter-Zuführ- und Rückführeinrichtung umfasst, mit welcher Lagerbehälter aus dem Zugriffsbereich des Bediengeräts zu der Bereitstellstation und von der Bereitstellstation in den Zugriffsbereich des Bediengeräts bewegbar sind. Dazu werden die Lagerbehälter mit dem Bediengerät auf der Lagerbehälter-Zuführ- und Rückführeinrichtung abgestellt und von dieser zu der Bereitstellstation bewegt. Die Lagerbehälter-Zuführ- und Rückführeinrichtung kann beispielsweise als einfaches Förderband ausgebildet sein.

Im einfachsten Fall der externen Anordnung der Kommissioniereinheit ist die Bereitstellstation für lediglich einen Lagerbehälter ausgelegt und umfasst nur einen Bereitstellplatz für diesen Lagerbehälter. Der Lagerbehälter wird dann mittels der Lagerbehälter-Zuführ- und Rückführeinrichtung direkt dem Bereitstellplatz zugeführt und von diesem rückgeführt (in den Zugriffsbereich des Bediengeräts). Dies macht es aber erforderlich, dass ein Lagerbehälter gleich nach Abarbeitung auf einen Lagerplatz zurückgeführt werden muss, da ansonsten kein weiterer Lagerbehälter bearbeitet werden kann.

Bei einer außerhalb der Lagereinheit angeordneten Kommissioniereinheit ist es bei einer bevorzugten Ausführungsform der erfindungsgemäßen Kommissioniervorrichtung vorgesehen, dass die Bereitstellstation eine Lagerbehälter-Transporteinrichtung umfasst, mit welcher Lagerbehälter dem Bereitstellplatz zugeführt werden und die so ausgebildet ist, dass zumindest ein Warteplatz für Lagerbehälter vorgesehen ist. Da in einem solchen Fall die Zuführung und die Rückführung an unterschiedlichen Orten stattfinden, ist es ferner vorgesehen, dass die Lagerbehälter-Zuführ- und Rückführeinrichtung ein Zuführ- und ein Rückführmittel umfasst.

In einem solchen Fall umfasst die Kommissioniereinheit also zumindest einen Warteplatz und einen Bereitstellplatz, so dass der Kommissioniereinheit zwei Lagerbehälter mit Portionen zugeführt werden können. Die Lagerbehälter mit Portionen werden erst dem Warteplatz zugeführt, von welchem die Lagerbehälter dann auf den Bereitstellplatz bewegt werden.

Bei der externen Anordnung einer Kommissioniereinheit kann es aus oben genannten Gründen vorteilhaft sein, den Zielbehälter nach dem Zusammenstellen eines Teils eines Zusammenstellauftrages oder eines vollständigen Zusammenstellauftrages wieder der Lagereinheit zuzuführen, um den Zusammenstellauftrag später zu vervollständigen oder dem Zielbehälter einen weiteren Zusammenstellauftrag zuzuführen. Um dies zu ermöglichen, ist es bei einer bevorzugten Ausführungsform vorgesehen, dass die Kommissioniereinheit eine Zielbehälter-Rückführeinrichtung umfasst, mit welcher ein Zielbehälter von dem Kommissionierplatz in den Zugriffsbereich des Bediengerätes bewegbar ist. Von dem Bediengerät wird der Zielbehälter dann aufgenommen und einem Lagerplatz zugeführt.

Bei der externen Anordnung der Kommissioniereinheit ist es ferner vorgesehen, dass die Kommissioniereinheit eine Packung-Zuführeinrichtung umfasst, mit welcher Packungen aus dem Griffbereich des Bediengerätes in den Zielbehälter bewegbar sind. Eine solche Zuführeinrichtung kann beispielsweise als einfach Rutsche ausgebildet sein, der das Bediengerät Packungen zuführen kann und die oberhalb des Zielbehälters auf dem Kommissionierplatz endet.

Im Nachfolgenden werden bevorzugte Ausführungsformen der erfindungsgemäßen Kommissioniervorrichtung sowie eine bevorzugte Ausführungsform des erfindungsgemäßen Verfahrens unter Bezugnahme auf die Zeichnung näher beschrieben, in welcher
Figur 1 eine schematische Draufsicht auf eine erste Ausführungsform der erfindungsgemäßen Kommissioniervorrichtung zeigt,
Figur 2 eine schematische Darstellung einer zweiten Ausführungsform der erfindungsgemäßen Kommissioniervorrichtung zeigt,
Figur 3 eine schematische Draufsicht einer dritten Ausführungsform der erfindungsgemäßen Kommissioniervorrichtung zeigt,
Figur 4 eine schematische Seitenansicht der dritten Ausführungsform zeigt, und
Figur 5 ein Ablaufdiagramm einer bevorzugten Ausführungsform des erfindungsgemäßen Verfahrens zeigt.

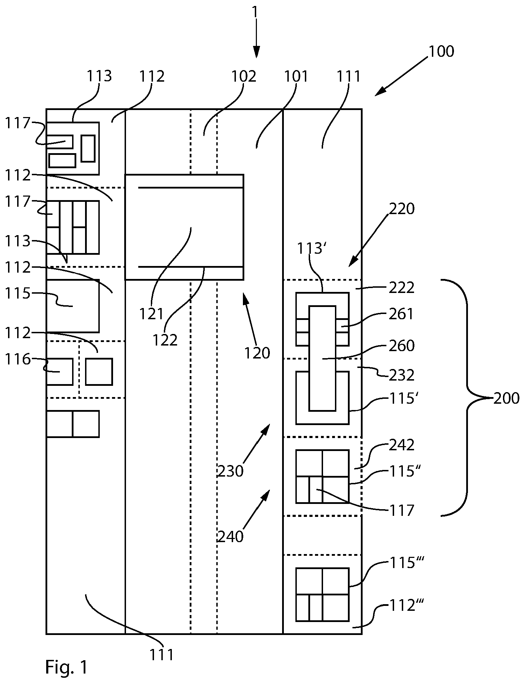

Figur 1 zeigt eine erste Ausführungsform einer erfindungsgemäßen Kommissioniervorrichtung 1 mit einer Lagereinheit 100 mit zwei parallelen Regalreihen mit jeweils einer Mehrzahl von horizontalen Regalböden 111, die jeweils eine Mehrzahl von Lagerplätzen 112 für Arzneimittelpackungen 116 und Lagerbehälter 113 aufweisen. Zwischen den beiden Regalreihen ist ein Gang 101 angeordnet, in welchem auf einer Horizontalführung 102 ein Bediengerät 120 vertikal und horizontal bewegbar ist, wobei bei der schematischen Darstellung gemäß Figur 1 die Vertikalführung für das Bediengerät 120 fortgelassen ist.

Wie dies bei der linken Regalreihe zu erkennen ist, sind auf dem oberen Regalboden 111 zwei Lagerbehälter 113, ein Zielbehälter 115 und eine Mehrzahl von Packungen 116 angeordnet, und zwar jeweils auf einem Lagerplatz 112, wobei sich die Lagerplätze als solche nach den auf einem Regalboden aufliegenden Behältnissen richten beziehungsweise die Packungen und Lagerbehälter bei einer Fläche auf einem Regalboden 111 abgelegt werden, deren Abmessung zur Aufnahme ausreichend ist. Die Anordnung, Anzahl und Größe der Lagerplätze pro Regalboden ist somit nicht fix, sondern variiert mit der Art der gelagerten Behältnisse, sprich Packungen beziehungsweise Lagerbehälter.

Wie dies bei den beiden Lagerbehältern 113 angedeutet ist, können in den Lagerbehältern aufgenommene Portionen 117 chaotisch (der obere Lagerbehälter 113) bzw. ungeordnet oder in in dem Lagerbehälter vorgesehenen Aufnahmen angeordnet sein (wie dies in dem unteren Lagerbehälter angedeutet ist), wobei die Aufnahmen für die Portionen bei der lediglich schemenhaften Darstellung gemäß Figur 1 fortgelassen sind.

Das horizontal und vertikal vor den Regalreihen verfahrbare Bediengerät 120 umfasst einen Ablagetisch 121 für Lagerbehälter und Packungen sowie eine Greifeinrichtung 122, mit welcher Packungen und Lagerbehälter von einem Lagerplatz auf den Ablagetisch und von dem Ablagetisch auf z. B. einen Lagerplatz bewegt werden können. Bei dem Bediengerät kann es sich beispielsweise um einen Backengreifer handeln, wie er beispielsweise in der Patentanmeldung EP 3 431 421 A1 offenbart ist, um eine detaillierte Beschreibung des Bediengerätes 120 zu vermeiden.

Zwar ist dies nicht explizit dargestellt, jedoch ist das Bediengerät 120 in der angedeuteten Ausführungsform auch um die Vertikalachse drehbar. In einer alternativen Ausführungsform kann das Bediengerät so breit ausgeführt sein, dass Packungen und Lagerbehälter über eine einer Regalreihe zugewandten Stirnseite auf den Ablagetisch und über die andere Stirnseite von dem Ablagetisch auf beispielsweise einen Lagerplatz bewegbar sind.

Die erfindungsgemäße Kommissioniervorrichtung 1 umfasst neben der Lagereinheit 100 eine Kommissioniereinheit 200, die bei der gezeigten Ausführungsform in die Lagereinheit 100 integriert ist, wozu in Abhängigkeit von der genauen Anordnung der Regalböden das Fortlassen eines Regalbodens im Bereich der Kommissioniereinheit erforderlich sein kann. Bei der gezeigten Ausführungsform ist die Kommissioniereinheit 200 in der "rechten" Hälfte der Lagereinheit 100 angeordnet, wobei die Tiefe der Kommissioniereinheit 200 der Tiefe der Regalböden 111 entspricht. Dadurch können gewisse Elemente der Kommissioniereinheit 200 durch Abschnitte eines Regalbodens realisiert sein, wie dies nachfolgend detaillierter beschrieben ist.

Die Kommissioniereinheit 200 umfasst bei der Ausführungsform gemäß Figur 1 eine Bereitstellstation 220 mit einem Bereitstellplatz 222, der bei der gezeigten Ausführungsform als Abschnitt eines Regalbodens 111 realisiert ist. Auf dem Bereitstellplatz 222 ist ein Lagerbehälter 113' mit einer Mehrzahl von (nicht dargestellten) Portionen angeordnet. Neben der Bereitstellstation 220 ist eine Kommissionierstation 230 mit einem Kommissionierplatz 232 angeordnet, wobei auch der Kommissionierplatz 232 bei der gezeigten Ausführungsform als Teil bzw. auf einem Abschnitt eines Regalbodens 111 realisiert ist. Auf dem Kommissionierplatz 232 ist ein Zielbehälter 115' angeordnet, in welchem Packungen und Portionen zusammengestellt werden können.

Um Portionen aus dem Lagerbehälter 113' in den Zielbehälter 115' zu überführen, ist oberhalb des Bereitstellplatzes und des Kommissionierplatzes eine Greifeinrichtung 260 angeordnet, die einen horizontal und vertikal verfahrbaren Greifer 261 umfasst, mit welchem Portionen aus dem Lagerbehälter 113' entnommen und in den Zielbehälter 115' überführt werden können. Bei dem Greifer kann es sich beispielsweise um einen Sauggreifer handeln, wie er in der Patentanmeldung EP 3 854 730 A1 offenbart ist, um eine detaillierte Beschreibung des Greifers 261 zu vermeiden.

Die Kommissioniereinheit 200 umfasst bei der gezeigten Ausführungsform ferner eine Abgabestation 240 mit einem Abgabeplatz 242, auf welchem ein Zielbehälter 115'' angeordnet ist, in welchem mehrere Portionen 117 und mehrere Packungen 116 angeordnet sind. Von dem Abgabeplatz 242 kann der Zielbehälter 115'' beispielsweise von einem Bediener entnommen werden, wie dies durch den gestrichelten Bereich der Außenwand der Lagereinheit 100 angedeutet ist.

Im unteren Bereich der rechten Regalreihe ist ferner ein Zielbehälter 115‴ auf einem Lagerplatz 112‴ angedeutet. Der Zielbehälter 115‴ wurde mit dem Bediengerät 120 von dem Kommissionierplatz auf den Lagerplatz 112‴ bewegt, um z. B. zu einem späteren Zeitpunkt weitere Packungen und/oder Portionen in den Zielbehälter 115‴ zu kommissionieren.

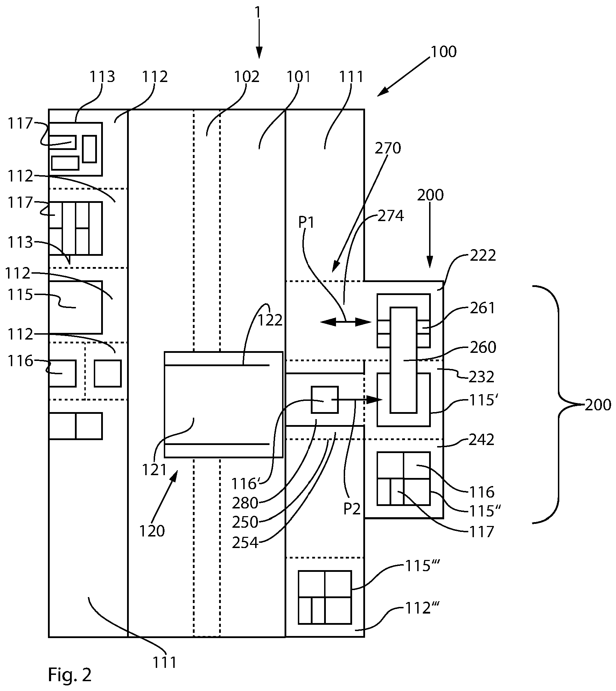

Figur 2 zeigt eine zweite Ausführungsform der erfindungsgemäßen Kommissioniervorrichtung 1. Bei dieser Ausführungsform ist die Kommissioniereinheit 200 "außerhalb" der Lagereinheit angeordnet. Aufgrund der Anordnung der Kommissioniereinheit 200 außerhalb kann das Bediengerät 120 die Lagerbehälter (und ggf. die Zielbehälter) nicht mehr direkt auf die entsprechenden Plätze der Bereitstellstation 220 und der Kommissionierstation 230 bewegen, da diese außerhalb des Zugriffsbereichs des Bediengeräts 120 angeordnet sind.

Die Kommissioniereinheit 200 umfasst bei dieser Ausführungsform daher eine Lagerbehälter-Zuführ- und Rückführeinrichtung 270, mit welcher Lagerbehälter aus einem Zugriffsbereich 274 des Bediengeräts zu dem Bereitstellplatz 222 der Bereitstellstation 220 und von dem Bereitstellplatz in den Zugriffsbereich 274 des Bediengeräts bewegbar sind, wie dies durch den Pfeil P1 angedeutet ist. Bei dieser Lagerbehälter-Zuführ- und Rückführeinrichtung 270 kann es sich bei der gezeigten Ausführungsform beispielsweise um ein einfaches Förderband handeln; der Bereitstellplatz 222 wird dann durch einen Abschnitt der Lagerbehälter-Zuführ- und Rückführeinrichtung 270 realisiert bzw. gebildet.

Bei der gezeigten Ausführungsform umfasst die Kommissioniervorrichtung ferner eine Zielbehälter-Rückführeinrichtung 250, mit welcher ein Zielbehälter 115' von dem Kommissionierplatz 232 in einen Zugriffsbereich 254 des Bediengeräts bewegbar ist. Bei alternativen Ausführungsformen (bei denen keine Ein- oder Zwischenlagerung eines Zielbehälters 115' notwendig ist) kann die Zielbehälter-Rückführeinrichtung 250 fortgelassen werden, der vollständig befüllte Zielbehälter 115' kann z. B. von einem Bediener entnommen werden.

Die Kommissioniereinheit 200 umfasst bei der gezeigten Ausführungsform ferner eine Packung-Zuführeinrichtung 280, mit welcher eine Packung 116' von dem Bediengerät in den Zielbehälter 115' bewegbar ist, wie dies durch den Pfeil P2 angedeutet ist. Im einfachsten Fall kann es sich bei der Packung-Zuführeinrichtung 280 um eine Rutsche handeln, die über dem Zielbehälter 115' endet.

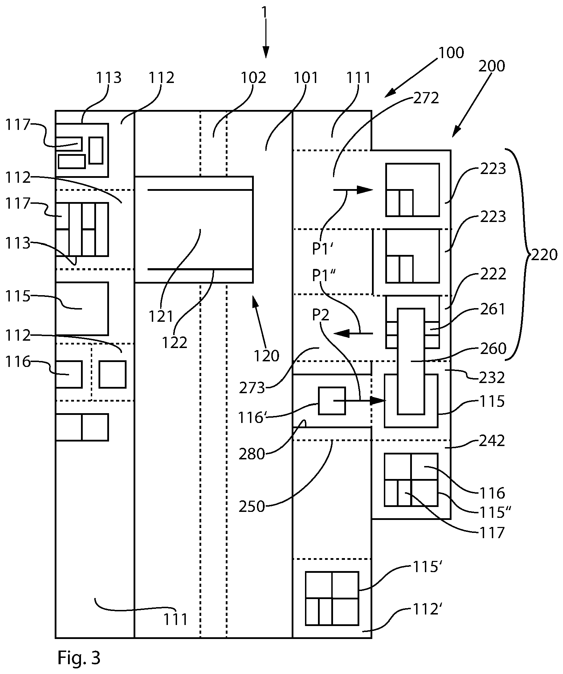

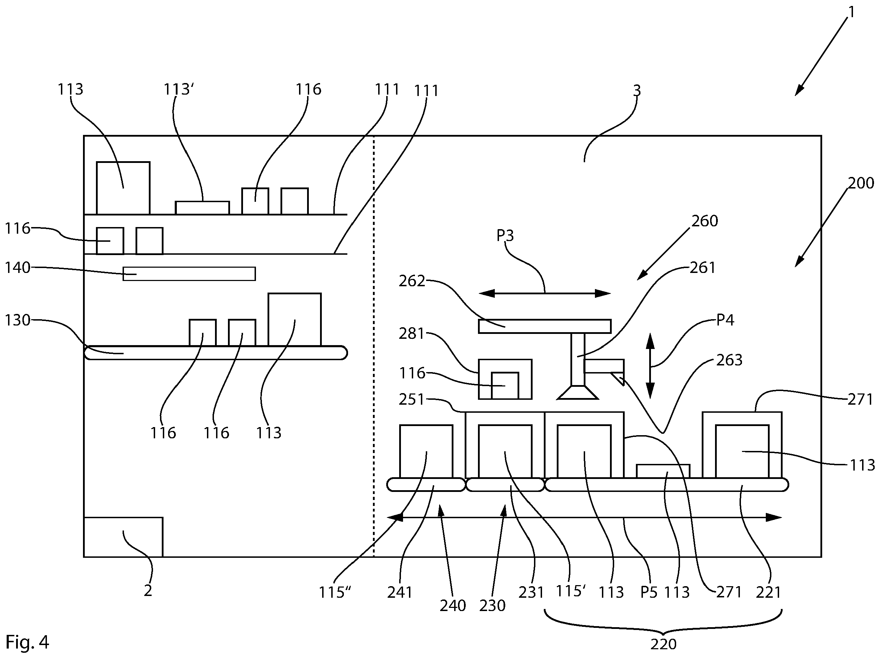

Figur 3 zeigt eine dritte bevorzugte Ausführungsform, bei welcher die Kommissioniereinheit 200 ebenfalls außerhalb der Lagereinheit 100 angedeutet ist. Im nachfolgenden werden lediglich die Unterschiede zu der zweiten Ausführungsform beschrieben, um Wiederholungen zu vermeiden. Bei dieser Ausführungsform umfasst die Bereitstellstation 220 eine Lagerbehälter-Transporteinrichtung 221 (siehe dazu auch Figur 4), mit welcher Lagerbehälter dem Bereitstellplatz 222 zugeführt werden und die so ausgebildet ist, dass zumindest ein Warteplatz 223 für Lagerbehälter vorgesehen ist. Die Lagerbehälter-Transporteinrichtung bietet somit die Möglichkeit, mehrere Lagerbehälter für die Bearbeitung in der Kommissioniereinheit bereitzuhalten, ohne dass die Bearbeitung der Packungen des aktuellen Zusammenstellauftrages unterbrochen werden muss. Bei alternativen Ausführungsformen können auch mehrere Warteplätze 223 vorgesehen sein. Die Lagerbehälter-Transporteinrichtung 221 kann beispielsweise als Förderband konzipiert sein, welches mit der Lagerbehälter-Zuführ- und Rückführeinrichtung 270 zum Aufnehmen und Weiterleiten von Lagerbehältern zusammenwirkt.

Die Bereitstellung von zumindest einem Warteplatz 223 bedingt, dass die Zuführung und die Rückführung von Lagerbehältern an getrennten Orten stattfinden muss, da ein Lagerbehälter auf dem Warteplatz einen Rücktransport des Zielbehälters mit der Lagerbehälter-Transporteinrichtung zumindest potenziell verhindert. Daher umfasst die Lagerbehälter-Zuführ- und Rückführeinrichtung 270 bei dieser Ausführungsform ein Zuführ- und ein Rückführmittel 272, 273. Mit dem Zuführmittel 272 werden Lagerbehälter aus dem Zugriffsbereich des Bediengerät der Bereitstellstation (und zwar einem Abschnitt der Lagerbehälter-Transporteinrichtung 221 der Bereitstellstation) zugeführt (siehe Pfeil P1'), mit dem Rückführmittel 273 werden Lagerbehälter nach der Entnahme von Portionen in den Zugriffsbereich des Bediengeräts bewegt (siehe Pfeil P1").

Figur 4 zeigt eine schematische Seitenansicht der Ausführungsform gemäß Figur 3, wobei im linken Abschnitt der Lagereinheit 100 ein Teil des Gehäuses 3 der Lagereinheit fortgelassen ist. In diesem linken Abschnitt erkennt man unter zwei Regalböden 111 eine Einlagerungseinrichtung 130 zum Bewegen von Packungen 116 und Lagerbehältern 113 in die Lagereinheit 100 und den Zugriffsbereich des Bediengeräts 120, welches die Lagerbehälter und Packungen von der Fördereinrichtung, die beispielsweise als Förderband ausgebildet sein kann, entnimmt und zu einem Lagerplatz bewegt. Über der Einlagerungseinrichtung 130 ist eine Identifiziereinrichtung 140 zum Identifizieren von Packungen 116 und ggf. Lagerbehältern 113 angeordnet. Am Boden der Lagereinheit 100 ist ferner eine Steuereinrichtung 2 angedeutet, mit welcher die zu steuernden Bauteile der Lagereinheit und der Kommissioniereinheit gekoppelt sind. Die Steuereinheit kann auch zum Analysieren eines Zusammenstellauftrages und Bestimmen von Lagerplätzen verwendet werden.

Bei der Ausführungsform gemäß Figur 4 ist bei dem Greifer 261 der Greifeinrichtung 260 eine Kamera 263 angeordnet, mit welcher Aufnahmen des Zielbehälters erstellt werden können, die im Anschluss z. B. in der Steuereinheit gespeichert und ggf. ausgewertet werden (um zum Beispiel eine zu ergreifende Portion und deren genaue Lage zu ermitteln).

Figur 4 ist ferner zu entnehmen, dass das Gehäuse 3 der Kommissioniervorrichtung zwei Öffnungen 271 für die Zuführ- und Rückführmittel der Lagerbehälter-Zuführ- und Rückführeinrichtung sowie eine Öffnung 251 für die Zielbehälter-Rückführeinrichtung umfasst. Oberhalb des Zielbehälters 115' ist in dem Gehäuse ferner eine Öffnung 281 für die Packung-Zuführeinrichtung vorgesehen.

Bei Figur 4 ist auch die Lagerbehälter-Transporteinrichtung 221 zu erkennen, mit welcher Lagerbehälter dem Bereitstellplatz 222 zugeführt werden und welche bei dieser Ausführungsform einen Warteplatz für Lagerbehälter umfasst. Neben der Bereitstellstation 220 mit der Lagerbehälter-Transporteinrichtung 221 sind ferner die Kommissionierstation 230 und die Abgabestation 240 zu erkennen - auch diese können in Abhängigkeit von der genauen Ausgestaltung der Kommissioniereinheit 200 Transporteinrichtungen 231 und 241 umfassen, um Zielbehälter aktiv von dem Kommissionierplatz auf den Abgabeplatz zu bewegen.

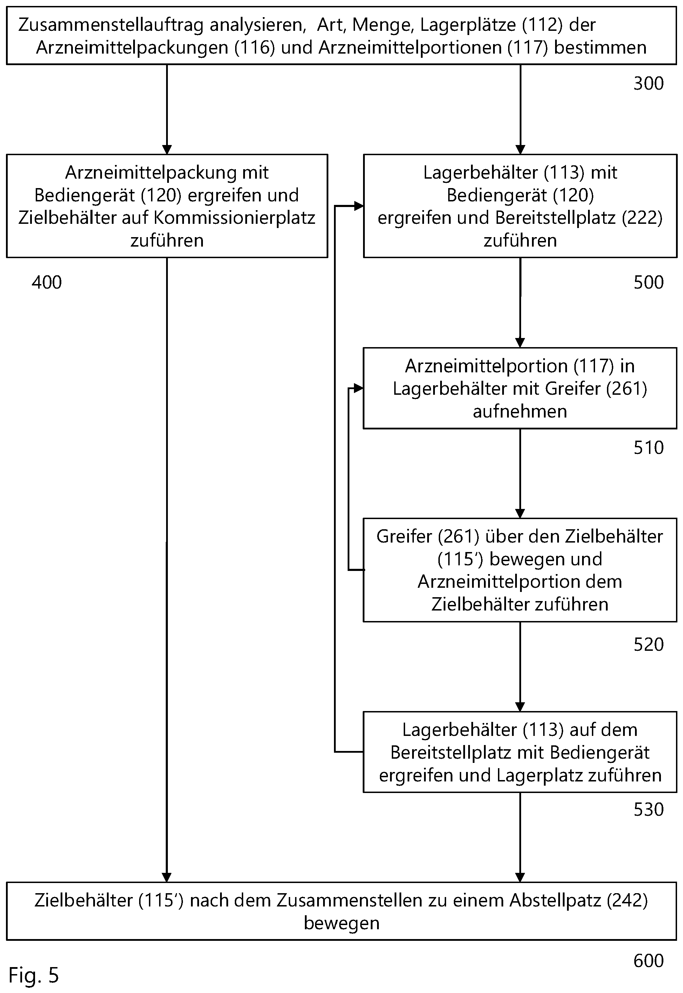

Anhand der Figur 5 wird eine bevorzugte Ausführungsform des erfindungsgemäßen Verfahrens beschrieben, und zwar unter Bezugnahme auf die Ausführungsform gemäß Figur 1, also mit "innenliegender" Kommissioniereinheit 200. In einem Schritt 300 wird mit der Steuereinrichtung 2 zunächst ein Zusammenstellauftrag ZA empfangen und analysiert und die Art und Menge sowie Lagerplätze 112 der Packungen 116 und Portionen 117 in der Lagereinheit 100 der Kommissioniereinheit 1 bestimmt. Regelmäßig wird zunächst gemäß Schritt 500 ein einer Portion des Zusammenstellauftrages zugeordneter Lagerbehälter 113 mit dem Bediengerät ergriffen und dem Bereitstellplatz 222 zugeführt, d. h. in diesem Falle mit dem Bediengerät darauf abgesetzt. Im Anschluss kann das Bediengerät dazu genutzt werden, Schritt 400 so oft wie notwendig auszuführen, nämlich eine Packung des Zusammenstellauftrages ergreifen und dem Zielbehälter zuführen. Parallel dazu wird in einem Schritt 510 mit dem Greifer 261 eine Portion 117 in dem Lagerbehälter ergriffen und, in einem Schritt 520, der Greifer über den Zielbehälter bewegt (der zuvor auf den Kommissionierplatz bewegt wurde, und zwar von einem Benutzer oder mit dem Bediengerät) und die Portion in den Zielbehälter abgelegt bzw. fallen gelassen. In Abhängigkeit von der Anzahl der Portionen der "aktuellen" Art (also der auf dem Bereitstellplatz angeordneten) werden die beiden vorgenannten Schritte so oft wie notwendig wiederholt (was durch den Pfeil zwischen 520 und 510 angedeutet ist). Wenn alle Portionen überführt wurden, wird in einem Schritt 530 der Lagerbehälter auf dem Bereitstellplatz mit dem Bediengerät ergriffen (der Bereitstellplatz ist in dem Zugriffsbereich des Bediengeräts) und einem Lagerplatz zugeführt. Die vorgenannten Schritte 500 - 530 werden so oft wiederholt, bis sämtliche Portionen in dem Zielbehälter 115' abgelegt sind. Anschließend wird in einem Schritt 600 der Zielbehälter 115' zu dem Abgabeplatz 242 bewegt, und zwar mit dem Bediengerät. Dies kann alternativ auch mit einer Fördereinrichtung wie einem Förderband geschehen.

## Patentansprüche

1. Verfahren zum Zusammenstellen von Verbrauchsmaterialien in Form von Portionen (117) und Packungen (116) auf der Basis von Zusammenstellaufträgen in einem Zielbehälter (115), wobei
a) ein Zusammenstellauftrag (ZA) analysiert und die Art und Menge sowie Lagerplätze (112) der Packungen (116) und Portionen (117) in einer Lagereinheit (100) einer Kommissioniervorrichtung (1) bestimmt wird,
b) bei einem einer Packung (116) zugeordneten Lagerplatz (112) die Packung mit einem Bediengerät (120) ergriffen und einem Zielbehälter (115) auf einem Kommissionierplatz (232) einer Kommissioniereinheit (200) der Kommissioniervorrichtung (1) zugeführt wird,
c1) bei einem einer Portion (117) zugeordneten Lagerplatz (112) ein Lagerbehälter (113) mit dem Bediengerät ergriffen und einem Bereitstellplatz (222) der Kommissioniereinheit (200) zugeführt wird,
c2) mit einem Greifer (261) einer Greifeinrichtung (260) eine Portion in dem Lagerbehälter auf dem Bereitstellplatz ergriffen wird,
c3) der Greifer (261) zu dem Zielbehälter (115) bewegt und die Portion dem Zielbehälter zugeführt wird, und
c4) der Lagerbehälter auf dem Bereitstellplatz mittels des Bediengeräts einem Lagerplatz zugeführt wird,
wobei die Reihenfolge der Schritte bzw. Schrittkombinationen b) und [c1), {c2) + c3)}, c4)] beliebig und die Anzahl der Wiederholungen von dem Zusammenstellauftrag abhängig ist.

2. Verfahren zum Zusammenstellen von Verbrauchsmaterialien in Form von Portionen (117) und Packungen (116) auf der Basis von Zusammenstellaufträgen in einem Zielbehälter (115) nach Anspruch 1,
**dadurch gekennzeichnet, dass** eine Portion ergriffen wird, indem der Greifer an eine vorgegebene Position verfahren wird, wobei die Position einer Portion (117) in dem Lagerbehälter (113) zugeordnet ist.

3. Verfahren zum Zusammenstellen von Verbrauchsmaterialien in Form von Portionen (117) und Packungen (116) auf der Basis von Zusammenstellaufträgen in einem Zielbehälter (115) nach Anspruch 1,
**dadurch gekennzeichnet, dass** eine Portion ergriffen wird, indem mit einer Kamera (263) eine Aufnahme der in dem Lagerbehälter (113) ungeordnet angeordneten Portionen erstellt wird, mit einer Bildverarbeitungssoftware die genaue Anordnung zumindest eines Teils der Portionen bestimmt und basierend darauf eine zu ergreifende Portion (117) festgelegt und ergriffen wird.

4. Verfahren zum Zusammenstellen von Verbrauchsmaterialien in Form von Portionen (117) und Packungen (116) auf der Basis von Zusammenstellaufträgen in einem Zielbehälter (115) nach einem der Ansprüche 1 - 3,
**dadurch gekennzeichnet, dass** der Zielbehälter nach dem Abarbeiten des Zusammenstellauftrags oder eines Teils davon mit Hilfe des Bediengeräts (120) zu einem Lagerplatz der Lagereinheit (100) bewegt und der Zielbehälter eingelagert wird.

5. Verfahren zum Zusammenstellen von Verbrauchsmaterialien in Form von Portionen (117) und Packungen (116) auf der Basis von Zusammenstellaufträgen in einem Zielbehälter (115) nach einem der Ansprüche 1 - 4,
**dadurch gekennzeichnet, dass** der Zielbehälter nach dem Zusammenstellen sämtlicher Packungen und Portionen zu einem Abgabeplatz (242) bewegt wird.

6. Verfahren zum Zusammenstellen von Verbrauchsmaterialien in Form von Portionen (117) und Packungen (116) auf der Basis von Zusammenstellaufträgen in einem Zielbehälter (115) nach einem der Ansprüche 1 - 5,
**dadurch gekennzeichnet, dass** der Zielbehälter (115) mit dem Bediengerät (120) von einem Lagerplatz (112) ergriffen und dem Kommissionierplatz (232) zugeführt wird.

7. Verfahren zum Zusammenstellen von Verbrauchsmaterialien in Form von Portionen (117) und Packungen (116) auf der Basis von Zusammenstellaufträgen in einem Zielbehälter (115) nach einem der Ansprüche 1 - 6,
**dadurch gekennzeichnet, dass** die Lagerbehälter zum Einlagern mittels einer Einlagerungseinrichtung (130) bereitgestellt werden und von dem Bediengerät zu einem Lagerplatz bewegt werden.

8. Verfahren zum Zusammenstellen von Verbrauchsmaterialien in Form von Portionen (117) und Packungen (116) auf der Basis von Zusammenstellaufträgen in einem Zielbehälter (115) nach einem der Ansprüche 1 - 7,
**dadurch gekennzeichnet, dass** vor dem Zuführen der ersten und/oder letzten Portion oder Packung eine Aufnahme des leeren und/oder befüllten Zielbehälters erstellt und gespeichert wird.

9. Verfahren zum Zusammenstellen von Verbrauchsmaterialien in Form von Portionen (117) und Packungen (116) auf der Basis von Zusammenstellaufträgen in einem Zielbehälter (115) nach Anspruch 8,
**dadurch gekennzeichnet, dass** nach dem Zuführen jeder Portion und jeder Packung eine Aufnahme des Zielbehälters erstellt und gespeichert wird.

10. Verfahren zum Zusammenstellen von Verbrauchsmaterialien in Form von Portionen (117) und Packungen (116) auf der Basis von Zusammenstellaufträgen in einem Zielbehälter (115) nach einem der Ansprüche 1 - 9,
**dadurch gekennzeichnet, dass** vor oder nach dem Zuführen jeder Portion und jeder Packung ein Code der Portion oder der Packung erfasst und mit einem Soll-Code verglichen wird.

11. Kommissioniervorrichtung (1) zum Zusammenstellen von Verbrauchsmaterialien in Form von Portionen (117) und Packungen (116) auf der Basis von Zusammenstellaufträgen in einem Zielbehälter (115), aufweisend
eine Lagereinheit (100) mit
zumindest einer Regalreihe mit einer Mehrzahl von horizontalen Regalböden (111) mit jeweils einer Mehrzahl von Lagerplätzen (112) für Packungen (116) und Lagerbehälter (113) für eine Mehrzahl von Portionen (117),
zumindest einem vor der Regalreihe horizontal und vertikal verfahrbaren Bediengerät (120) mit einem Ablagetisch (121) und einer Transporteinrichtung (122) zum Bewegen von Packungen und Lagerbehältern,
zumindest einer Einlagerungseinrichtung (130), mit welcher Packungen (116) und Lagerbehälter (113) in die Lagereinheit (100) bewegt werden und von welcher das Bediengerät (120) Packungen (116) und Lagerbehälter (113) entnehmen kann, und
einer Identifiziereinrichtung (140) zum Identifizieren von Packungen (116) und Lagerbehältern (113), **dadurch gekennzeichnet, dass** die Kommissioniervorrichtung zusätzlich zumindest eine Kommissioniereinheit (200) aufweist mit
einer Bereitstellstation (220) mit einem Bereitstellplatz (222) für einen Lagerbehälter, wobei die Bereitstellstation derart ausgebildet ist, dass Lagerbehälter von dem Ablagetisch (121) des Bediengeräts (120) auf den Bereitstellplatz und von dem Bereitstellplatz auf den Ablagetisch (121) bewegbar sind,
einer Kommissionierstation (230) mit einem Kommissionierplatz (232) für einen Zielbehälter, wobei die Kommissionierstation derart ausgebildet ist, dass Packungen von dem Bediengerät in den Zielbehälter auf dem Kommissionierplatz bewegbar sind,
und einer oberhalb des Bereitstellplatzes (222) und des Kommissionierplatzes (232) angeordneten Greifeinrichtung (260) mit einem vertikal und horizontal verfahrbaren Greifer (261), mit welchem Portionen von dem Lagerbehälter auf dem Bereitstellplatz in den Zielbehälter befördert werden können.

12. Kommissioniervorrichtung (1) zum Zusammenstellen von Verbrauchsmaterialien in Form von Portionen (117) und Packungen (116) auf der Basis von Zusammenstellaufträgen in einem Zielbehälter (115) nach Anspruch 11,
**dadurch gekennzeichnet, dass** die Kommissioniereinheit (200) zumindest eine Kamera (263) umfasst, mit welcher Aufnahmen vom Inhalt des Lagerbehälters auf dem Bereitstellplatz und/oder des Zielbehälters auf dem Kommissionierplatz erstellbar sind.

13. Kommissioniervorrichtung (1) zum Zusammenstellen von Verbrauchsmaterialien in Form von Portionen (117) und Packungen (116) auf der Basis von Zusammenstellaufträgen in einem Zielbehälter (115) nach einem der Ansprüche 11 oder 12,
**dadurch gekennzeichnet, dass** die Kommissioniereinheit (200) eine Lagerbehälter-Zuführ- und Rückführeinrichtung (270) umfasst, mit welcher Lagerbehälter aus dem Zugriffsbereich des Bediengeräts zu der Bereitstellstation (220) und von der Bereitstellstation in den Zugriffbereich des Bediengeräts bewegbar sind.

14. Kommissioniervorrichtung (1) zum Zusammenstellen von Verbrauchsmaterialien in Form von Portionen (117) und Packungen (116) auf der Basis von Zusammenstellaufträgen in einem Zielbehälter (115) nach Anspruch 13,
**dadurch gekennzeichnet, dass** die Bereitstellstation (220) eine Lagerbehälter-Transporteinrichtung (221) umfasst, mit welcher Lagerbehälter dem Bereitstellplatz (222) zugeführt werden und die so ausgebildet ist, dass zumindest ein Warteplatz (223) für Lagerbehälter vorgesehen ist, und
dass die Lagerbehälter-Zuführ- und Rückführeinrichtung (270) ein Zuführ- und Rückführmittel (272, 273) umfasst.

15. Kommissioniervorrichtung (1) zum Zusammenstellen von Verbrauchsmaterialien in Form von Portionen (117) und Packungen (116) auf der Basis von Zusammenstellaufträgen in einem Zielbehälter (115) nach Anspruch 13 oder 14,
**dadurch gekennzeichnet, dass** die Kommissioniereinheit (200) eine Zielbehälter-Rückführeinrichtung (250) umfasst, mit welcher ein Zielbehälter von dem Kommissionierplatz (232) in den Zugriffsbereich des Bediengeräts bewegbar ist.

16. Kommissioniervorrichtung (1) zum Zusammenstellen von Verbrauchsmaterialien in Form von Portionen (117) und Packungen (116) auf der Basis von Zusammenstellaufträgen in einem Zielbehälter (115) nach einem der Ansprüche 13 - 15,
**dadurch gekennzeichnet, dass** die Kommissioniereinheit (200) eine Packung-Zuführeinrichtung (280) umfasst, mit welcher Packungen von dem Bediengerät in den Zielbehälter bewegbar sind.

## Claims

1. A method for assembling consumable materials in the form of portions (117) and packages (116) on the basis of assembly orders in a target container (115), wherein
a) an assembly order (AO) is analyzed and the type and quantity, as well as storage locations (112) of the packages (116) and portions (117) in a storage unit (100) of an order-picking apparatus (1) are determined,
b) at a storage location (112) assigned to a package (116), the package is picked up by an operating device (120) and fed to a target container (115) at an order-picking location (232) of an order-picking unit (200) of the order-picking apparatus (1),
c1) at a storage location (112) assigned to a portion (117), a storage container (113) is picked up by the operating device and fed to a provision location (222) of the order-picking unit (200),
c2) a portion in the storage container at the provision location is gripped with a gripper (261) of a gripping device (260),
c3) the gripper (261) is moved to the target container (115) and the portion is fed to the target container, and
c4) the storage container at the provision location is fed to a storage location by means of the operating device,
wherein the sequence of the steps or step combinations b) and [c1), {c2) + c3)}, c4)] is arbitrary and the number of repetitions depends on the assembly order.

2. The method for assembling consumable materials in the form of portions (117) and packages (116) on the basis of assembly orders in a target container (115) according to claim 1,
**characterized in that** a portion is picked up by moving the gripper to a specified position, the position being assigned to a portion (117) in the storage container (113).

3. The method for assembling consumable materials in the form of portions (117) and packages (116) on the basis of assembly orders in a target container (115) according to claim 1,
**characterized in that** a portion is picked up by using a camera (263) to create an image of the portions arranged in unordered fashion in the storage container (113), using image processing software to determine the exact arrangement of at least some of the portions and, based on this, determining and picking up a portion (117) to be picked up.

4. The method for assembling consumable materials in the form of portions (117) and packages (116) on the basis of assembly orders in a target container (115) according to any one of claims 1 to 3,
**characterized in that** after the assembly order or a part thereof has been processed, the target container is moved to a storage location of the storage unit (100) with the aid of the operating device (120), and the target container is stored.

5. The method for assembling consumable materials in the form of portions (117) and packages (116) on the basis of assembly orders in a target container (115) according to any one of claims 1 to 4,
**characterized in that** the target container is moved to a dispensing location (242) after all the packages and portions have been assembled.

6. The method for assembling consumable materials in the form of portions (117) and packages (116) on the basis of assembly orders in a target container (115) according to any one of claims 1 to 5,
**characterized in that** the target container (115) is picked up by the operating device (120) from a storage location (112) and fed to the order-picking location (232).

7. The method for assembling consumable materials in the form of portions (117) and packages (116) on the basis of assembly orders in a target container (115) according to any one of claims 1 to 6,
**characterized in that** the storage containers are provided for storage by means of a storing device (130) and are moved to a storage location by the operating device.

8. The method for assembling consumable materials in the form of portions (117) and packages (116) on the basis of assembly orders in a target container (115) according to any one of claims 1 to 7,
**characterized in that** an image of the empty and/or filled target container is created and stored before the feeding of the first and/or last portion or package.

9. The method for assembling consumable materials in the form of portions (117) and packages (116) on the basis of assembly orders in a target container (115) according to claim 8,
**characterized in that** after the feeding of each portion and each package, an image of the target container is created and stored.

10. The method for assembling consumable materials in the form of portions (117) and packages (116) based on assembly orders in a target container (115) according to any one of claims 1 to 9,
**characterized in that** before or after the feeding of each portion and each package, a code of the portion or package is detected and compared with a target code.

11. An order-picking apparatus (1) for assembling consumable materials in the form of portions (117) and packages (116) on the basis of assembly orders in a target container (115), comprising
a storage unit (100) having
at least one row of shelves with a plurality of horizontal shelves (111), each with a plurality of storage locations (112) for packages (116) and storage containers (113) for a plurality of portions (117),
at least one operating device (120), which can be moved horizontally and vertically in front of the row of shelves, with a deposit table (121) and a transport device (122) for moving packages and storage containers,
at least one storing device (130), with which packages (116) and storage containers (113) are moved into the storage unit (100) and from which the operating device (120) can remove packages (116) and storage containers (113), and
an identification device (140) for identifying packages (116) and storage containers (113), **characterized in that**
the order-picking apparatus additionally comprises
at least one order-picking unit (200) having
a provision station (220) with a provision location (222) for a storage container, wherein the provision station is designed in such a way that storage containers can be moved from the deposit table (121) of the operating device (120) to the provision location and from the provision location to the deposit table (121),
an order-picking station (230) with an order-picking location (232) for a target container, the order-picking station being designed in such a way that packages can be moved by the operating device into the target container at the order-picking location,
and a gripping device (260) arranged above the provision location (222) and the order-picking location (232) with a vertically and horizontally movable gripper (261), with which portions can be conveyed from the storage container at the provision location into the target container.

12. The order-picking apparatus (1) for assembling consumable materials in the form of portions (117) and packages (116) on the basis of assembly orders in a target container (115) according to claim 11,
**characterized in that** the order-picking unit (200) comprises at least one camera (263), with which images can be produced of the contents of the storage container at the provision location and/or of the target container at the order-picking location.

13. The order-picking apparatus (1) for assembling consumable materials in the form of portions (117) and packages (116) on the basis of assembly orders in a target container (115) according to any one of claims 11 or 12,
**characterized in that** the order-picking unit (200) comprises a storage container feed and return device (270), with which storage containers can be moved from the access area of the operating device to the provision station (220) and from the provision station into the access area of the operating device.

14. The order-picking apparatus (1) for assembling consumable materials in the form of portions (117) and packages (116) on the basis of assembly orders in a target container (115) according to claim 13,
**characterized in that** the provision station (220) comprises a storage container transport device (221), with which storage containers are fed to the provision location (222) and which is designed in such a way that at least one waiting location (223) for storage containers is provided, and
**in that** the storage container feed and return device (270) comprises a feed and return means (272, 273).

15. The order-picking apparatus (1) for assembling consumable materials in the form of portions (117) and packages (116) on the basis of assembly orders in a target container (115) according to claim 13 or 14,
**characterized in that** the order-picking unit (200) comprises a target container return device (250) with which a target container can be moved from the order-picking location (232) into the access area of the operating device.

16. The order-picking apparatus (1) for assembling consumable materials in the form of portions (117) and packages (116) on the basis of assembly orders in a target container (115) according to any one of claims 13 to 15,
**characterized in that** the order-picking unit (200) comprises a package feed device (280) with which packages can be moved by the operating device into the target container.

## Revendications

1. Procédé d'assemblage de consommables sous forme de portions (117) et d'emballages (116) sur la base d'ordres d'assemblage dans un récipient de destination (115), dans lequel
a) un ordre d'assemblage (OA) est analysé et le type, la quantité ainsi que les emplacements de stockage (112) des emballages (116) et des portions (117) dans une unité de stockage (100) d'un dispositif de préparation de commandes (1) sont déterminés,
b) à un emplacement de stockage (112) associé à un emballage (116), l'emballage est prélevé par un dispositif de commande (120) et acheminé vers un récipient de destination (115) sur un emplacement de préparation de commande (232) d'une unité de préparation de commande (200) du dispositif de préparation de commande (1),
c1) à un emplacement de stockage (112) associé à une portion (117), un récipient de stockage (113) est prélevé par le dispositif de commande et acheminé vers un emplacement de mise à disposition (222) de l'unité de préparation de commandes (200),
c2) une portion est prélevée à l'aide d'un préhenseur (261) d'un dispositif de préhension (260) dans le récipient de stockage situé sur l'emplacement de mise à disposition,
c3) le préhenseur (261) est déplacé vers le récipient de destination (115) et la portion est acheminée vers le récipient de destination, et
c4) le récipient de stockage situé sur l'emplacement de mise à disposition est acheminé vers un emplacement de stockage au moyen du dispositif de commande,
l'ordre des étapes ou des combinaisons d'étapes b) et [c1), {c2) + c3)}, c4)] étant arbitraire et le nombre de répétitions dépendant de l'ordre d'assemblage.

2. Procédé d'assemblage de consommables sous forme de portions (117) et d'emballages (116) sur la base d'ordres d'assemblage dans un récipient de destination (115) selon la revendication 1,
**caractérisé en ce qu'**une portion est prélevée en déplaçant le préhenseur vers une position prédéfinie, ladite position étant associée à une portion (117) dans le récipient de stockage (113).

3. Procédé d'assemblage de consommables sous forme de portions (117) et d'emballages (116) sur la base d'ordres d'assemblage dans un récipient de destination (115) selon la revendication 1,
**caractérisé en ce qu'**une portion est prélevée en utilisant une caméra (263) pour créer une image des portions disposées de manière désordonnée dans le récipient de stockage (113), en utilisant un logiciel de traitement d'images pour déterminer la disposition exacte d'au moins une partie des portions et, sur cette base, en déterminant et en prélevant une portion (117) à prélever.

4. Procédé d'assemblage de consommables sous forme de portions (117) et d'emballages (116) sur la base d'ordres d'assemblage dans un récipient de destination (115) selon l'une des revendications 1 à 3,
**caractérisé en ce qu'**après l'exécution de l'ordre d'assemblage ou d'une partie de celui-ci, le récipient de destination est déplacé vers un emplacement de stockage de l'unité de stockage (100) à l'aide du dispositif de commande (120), et le récipient de destination y est stocké.

5. Procédé d'assemblage de consommables sous forme de portions (117) et d'emballages (116) sur la base d'ordres d'assemblage dans un récipient de destination (115) selon l'une des revendications 1 à 4,
**caractérisé en ce que** le récipient de destination est déplacé vers un emplacement de distribution (242) une fois que tous les emballages et toutes les portions ont été assemblés.

6. Procédé d'assemblage de consommables sous forme de portions (117) et d'emballages (116) sur la base d'ordres d'assemblage dans un récipient de destination (115) selon l'une des revendications 1 à 5,
**caractérisé en ce que** le récipient de destination (115) est prélevé par le dispositif de commande (120) à partir d'un emplacement de stockage (112) et acheminé vers l'emplacement de préparation de commande (232).

7. Procédé d'assemblage de consommables sous forme de portions (117) et d'emballages (116) sur la base d'ordres d'assemblage dans un récipient de destination (115), selon l'une des revendications 1 à 6,
**caractérisé en ce que** les récipients de stockage sont mis à disposition pour le stockage au moyen d'un dispositif de stockage (130) et sont déplacés par le dispositif de commande vers un emplacement de stockage.

8. Procédé d'assemblage de consommables sous forme de portions (117) et d'emballages (116) sur la base d'ordres d'assemblage dans un récipient de destination (115) selon l'une des revendications 1 à 7,
**caractérisé en ce qu'**une image du récipient de destination vide et/ou rempli est créée et enregistrée avant l'alimentation de la première et/ou de la dernière portion ou du premier et/ou du dernier emballage.

9. Procédé d'assemblage de consommables sous forme de portions (117) et d'emballages (116) sur la base d'ordres d'assemblage dans un récipient de destination (115) selon la revendication 8,
**caractérisé en ce qu'**après l'alimentation de chaque portion et de chaque emballage, une image du récipient de destination est créée et enregistrée.

10. Procédé d'assemblage de consommables sous forme de portions (117) et d'emballages (116) sur la base d'ordres d'assemblage dans un récipient de destination (115) selon l'une des revendications 1 à 9,
**caractérisé en ce qu'**avant ou après l'alimentation de chaque portion et de chaque emballage, un code de la portion ou de l'emballage est détecté et comparé à un code de référence.

11. Dispositif de préparation de commandes (1) destiné à assembler des consommables sous forme de portions (117) et d'emballages (116) sur la base d'ordres d'assemblage dans un récipient de destination (115), comprenant
une unité de stockage (100) comportant
au moins une rangée d'étagères avec une pluralité d'étagères horizontales (111), chacune comportant une pluralité d'emplacements de stockage (112) pour des emballages (116) et des récipients de stockage (113) pour une pluralité de portions (117),
au moins un dispositif de commande (120), pouvant être déplacé horizontalement et verticalement devant la rangée d'étagères, muni d'une table de dépôt (121) et d'un dispositif de transport (122) destiné à déplacer les emballages et les récipients de stockage,
au moins un dispositif de stockage (130), à l'aide duquel les emballages (116) et les récipients de stockage (113) sont transférés dans l'unité de stockage (100) et à partir duquel le dispositif de commande (120) peut prélever des emballages (116) et des récipients de stockage (113), et
un dispositif d'identification (140) destiné à identifier les emballages (116) et les récipients de stockage (113), **caractérisé en ce que**
le dispositif de préparation de commandes comprend en outre
au moins une unité de préparation de commandes (200) comportant
une station de mise à disposition (220) avec un emplacement de mise à disposition (222) pour un récipient de stockage, la station de mise à disposition étant conçu de telle sorte que les récipients de stockage puissent être déplacés depuis la table de dépôt (121) du dispositif de commande (120) vers l'emplacement de mise à disposition et de l'emplacement de mise à disposition vers la table de dépôt (121),
une station de préparation de commandes (230) comportant un emplacement de préparation de commande (232) destiné à un récipient de destination, la station de préparation de commandes étant conçue de telle sorte que les emballages puissent être déplacés par le dispositif de commande vers le récipient de destination à l'emplacement de préparation de commande,
et un dispositif de préhension (260) disposé au-dessus de l'emplacement de mise à disposition (222) et de l'emplacement de préparation de commande (232), comportant un préhenseur (261) déplaçable verticalement et horizontalement, à l'aide duquel des portions peuvent être transférées du récipient de stockage situé à l'emplacement de mise à disposition vers le récipient de destination.

12. Dispositif de préparation de commandes (1) destiné à assembler des consommables sous forme de portions (117) et d'emballages (116) sur la base d'ordres d'assemblage dans un récipient de destination (115) selon la revendication 11,
**caractérisé en ce que** l'unité de préparation de commandes (200) comprend au moins une caméra (263), permettant de générer des images du contenu du récipient de stockage situé à l'emplacement de mise à disposition et/ou du récipient de destination situé à l'emplacement de préparation de commande.

13. Dispositif de préparation de commandes (1) destiné à assembler des consommables sous forme de portions (117) et d'emballages (116) sur la base d'ordres d'assemblage dans un récipient de destination (115) selon l'une des revendications 11 ou 12,
**caractérisé en ce que** l'unité de préparation de commandes (200) comprend un dispositif d'alimentation et de retour des récipients de stockage (270), grâce auquel les récipients de stockage peuvent être déplacés de la zone d'accès du dispositif de commande vers la station de mise à disposition (220) et de la station de mise à disposition vers la zone d'accès du dispositif de commande.

14. Dispositif de préparation de commandes (1) destiné à assembler des consommables sous forme de portions (117) et d'emballages (116) sur la base d'ordres d'assemblage dans un récipient de destination (115) selon la revendication 13,
**caractérisé en ce que** la station de mise à disposition (220) comprend un dispositif de transport de récipients de stockage (221), à l'aide duquel des récipients de stockage sont transférés vers l'emplacement de mise à disposition (222) et qui est conçu de telle sorte qu'au moins un emplacement d'attente (223) pour les récipients de stockage soit prévu, et
**en ce que** le dispositif d'alimentation et de retour des récipients de stockage (270) comprend des moyens d'alimentation et de retour (272, 273).

15. Dispositif de préparation de commandes (1) destiné à assembler des consommables sous forme de portions (117) et d'emballages (116) sur la base d'ordres d'assemblage dans un récipient de destination (115) selon la revendication 13 ou 14,
**caractérisé en ce que** l'unité de préparation de commandes (200) comprend un dispositif de retour du récipient de destination (250), grâce auquel un récipient de destination peut être déplacé depuis l'emplacement de préparation de commande (232) vers la zone d'accès du dispositif de commande.

16. Dispositif de préparation de commandes (1) destiné à assembler des consommables sous forme de portions (117) et d'emballages (116) sur la base d'ordres d'assemblage dans un récipient de destination (115) selon l'une des revendications 13 à 15,
**caractérisé en ce que** l'unité de préparation de commandes (200) comprend un dispositif d'alimentation en emballages (280) grâce auquel des emballages peuvent être déplacés par le dispositif de commande dans le récipient de destination.
